# EUROPÄISCHE PATENTSCHRIFT

(11) **EP 1 972 406 B1**
(45) Veröffentlichungstag und Bekanntmachung des Hinweises auf die Patenterteilung: **26.01.2011**
(21) Anmeldenummer: 07016840.6
(22) Anmeldetag: 28.08.2007
(51) Int. Cl.: B23K 9/02, B23K 9/025, B23K 9/08, B23K 9/173, B23K 9/09, B23K 101/18

(54) **Verfahren zum Lichtbogenfügen mit Wechselstrom mit Gelenken des Lichtbogens während mindestens jeder fünften positiven Impulstromphase durch ein oder mehrere externe Magnetfelder**
Process of arc welding with alternating current and with oscillation of the arc during at least each fifth positive pulsed current phase by one or more external magnetic fields
Procédé de soudage à l'arc avec courant alternatif et osciallation de l'arc pendant au moins chaque cinquième phase positive du courant pulsé à l'aide d'un ou plusieurs champs magnétiques

(30) Priorität: 22.03.2007 DE 102007013801; 12.04.2007 DE 102007017226
(43) Veröffentlichungstag der Anmeldung: 24.09.2008
(73) Patentinhaber: PanGas, 6252 Dagmersellen (CH)
(72) Erfinder: Wilhelm, Gerald, 86551 Aichach (DE)
(74) Vertreter: Gellner, Bernd

(56) Entgegenhaltungen:
- EP-A- 1 491 278
- US-A- 2 152 194
- DATABASE WPI Week 197747 Derwent Publications Ltd., London, GB; AN 1977-84246Y XP002455260 -& SU 538 842 A (KIEV POLY) 24. Dezember 1976 (1976-12-24)
- DATABASE WPI Week 199209 Derwent Publications Ltd., London, GB; AN 1992-070986 XP002455261 -& SU 1 637 971 A (VORON ENG-CONS INST) 30. März 1991 (1991-03-30)
- DATABASE WPI Week 200056 Derwent Publications Ltd., London, GB; AN 2000-593030 XP002455262 -& RU 2 146 583 C1 (UNIV UFA AVIAT TECH) 20. März 2000 (2000-03-20)

## Beschreibung

Die Erfindung betrifft ein Verfahren zum Lichtbogenfügen, insbesondere zum Lichtbogenschweißen gemäß dem Oberbegriff des Anspruchs 1 (siehe, z.B., su 538 842).

Zum Lichtbogenschweißen unter Schutzgas, dem Metall-Schutzgas-Schweißen (MSG-Schweißen) werden verschiedene Schweißverfahren eingesetzt. Neben dem Verfahren mit abschmelzender Elektrode, zu welcher das Metall-Aktiv-Gas- und das Metall-Inert-Gas-Schweißen zählen, gibt es das mit nicht abschmelzender Elektrode arbeitende Wolfram-Inert-Gas-Schweißen und das Plasmaschweißen. Beim Metall-Schutzgas-Löten (MSG-Löten) wird eine stoffschlüssige Verbindung durch den Zusatzwerkstoff hergestellt. Dazu wird der Zusatzwerkstoff im Lichtbogen aufgeschmolzen und verbindet sich mit dem Grundwerkstoff.

Beim Lichtbogenfügen mit abschmelzender Elektrode brennt ein Lichtbogen zwischen abschmelzender Elektrode und Werkstück. Zur Erzeugung des Lichtbogens wird ein elektrisches Feld zwischen Elektrode und Werkstück angelegt. Der Materialübergang von der abschmelzenden Elektrode zum Werkstück erfolgt durch Ablösung von Tropfen von der Elektrode. Neben dem Schweißen mit nicht pulsierendem Gleichstrom gibt es auch das Schweißen mit pulsierendem Gleichstrom, bei welchem der Schweißstrom zumindest eine Impulsstromphase und eine Grundstromphase, in der der Strom deutlich niedriger ist als in der Impulsstromphase, aufweist. Ferner gibt es auch ein Schweißen mit Wechselstrom, bei welchem die Polarität wechselt. Auch beim Wechselstromschweißen weist die positive Phase häufig zumindest eine Impulsstromphase mit hohem Strom und eine Grundstromphase mit niedrigem Strom auf.

Das Metall-Schutzgas-Schweißen mit Wechselstrom wird seit mehreren Jahren angewandt und verschiedene Druckschriften betreffen diesen Prozess. So beinhaltet in DE 4023155 eine Synchronisation von Drahtzufuhr und negativer Polung des Wechselstroms. In der DE 19906039 wiederum wird ein maximaler Strompegel für die positive Phase festgesetzt. Die EP 0890407 beinhaltet eine Vörgehensweise zur Verringerung der Abfallzeit beim Abfall des positiven Schweißstroms. Die US 6376802 beinhaltet ein Verfahren, welches ein Unterbrechen des Lichtbogens verhindert. Die EP 1491278 offenbart die Verwendung von Helium und von dotiertem Helium im Schutzgas beim Wechselstromschweißen.

Neben dem Schweißen mit abschmelzender Elektrode wird seit einigen Jahren auch das Metall-Schutzgas-Löten mit abschmelzender Elektrode praktiziert. Hier wird eine Drahtelektrode mit niedrigem Schmelzpunkt verwendet. Das Ziel ist eine Lötverbindung mit möglichst keiner oder nur geringer Aufschmelzung des Grundwerkstoffes. Neueste Entwicklungen versuchen auch eine Kombination beider Prozesse, z.B. Verbinden von Aluminiumwerkstoffen mit beschichteten Stahlblechen, wobei zur einen Werkstoffseite hin ein Lötprozess vorherrscht, und zur anderen ein Schweißprozess. All diese Prozesse werden mit Gleichstrom, mit Impulsstrom oder mit Wechselstrom durchgeführt. Beispiele dafür finden sich in der EP 1129808 oder in der EP 1491278 oder in der EP 1321218 beschrieben.

Unter dem Begriff Lichtbogenfügen werden die Verfahren, die mit Lichtbogen arbeiten, zusammengefasst, also sowohl das Verbindungsschweißen und das Verbindungslöten als auch das Auftragsschweißen und das Auftragslöten.

Weiterhin ist es bekannt, dass der Lichtbogen beim Schweißen mittels externer longitudinaler oder transversaler Magnetfelder in seiner Beschaffenheit und in seiner Lage beeinflusst werden kann. Eine Beeinflussung des Lichtbogenschweißens ist beispielsweise in "Beitrag zur Lichtbogensteuerung durch transversale Zusatzmagnetfelder bei mechanisierten Lichtbogenschweißverfahren" von U.Dilthey, Dissertation, RWTH Aachen (technische Hochschule, Aachen), 1972 beschrieben oder in "Beeinflussung der Metall-Schutzgasschweißung durch Magnetfelder" von H.B.Basler, Dissertation, TU Hannover (Technische Universität, Hannover), 1973. Auch im Rahmen eines AIF Vorhaben wurde der Einfluss von externen Magnetfeldern untersucht, wie die Veröffentlichung "MAGM-Hochleistungsschweißen mit Massiv- und Fülldrähten", AIF Vorhaben ; Abschlußbericht AIF 103 68N ; Datum des Berichts: 28.05.1998, Institut für Schweißtechnische Fertigungsverfahren der Rheinisch-Westfälischen Technischen Hochschule Aachen, Ulrich Dilthey , P. Warmuth, Techn. Hochsch., ISF, Aachen, 1998 zeigt.

Ein Verfahren zum Schweißen von Bauteilen aus Aluminium, bei welchem der Lichtbogen mit einem Magnetfeld beeinflusst wird, lehrt die SU 538842. Auch die SU 1637971 lehrt ein Verfahren zum Lichtbogenschweißen, bei welchem der Lichtbogen mit einem magnetischen Feld überlagert wird. Eine Beeinflussung der Lage des Lichtbogens beim WIG-Schweißen mit einem Magnetfeld beinhaltet die JP 58/205680. Ein Verfahren und eine Vorrichtung zum Auslenken eines Lichtbogens beim Schweißen in unterschiedliche Richtungen beinhaltet die US 4249061.

Wird mittels Schweißen oder Löten eine stoffschlüssige Verbindung hergestellt, spricht man auch vom Verbindungsschweißen oder Verbindungslöten. Beim Verbindungsschweißen/-löten muss oftmals in der Wurzellage ein Spalt überbrückt werden. An der Bearbeitungsstelle schmilzt der Grundwerkstoff das durch die abschmelzende Elektrode bereitgestellte Zusatzmaterial auf beziehungsweise an. Der Grundwerkstoff schmilzt insbesondere an den Kanten des Spalts auf. Damit eine Verbindung gebildet wird, darf die Schweiß- beziehungsweise Lotnaht nicht durchfallen, sondern aus dem Schweißbad muss eine verbindende Schweißnaht entstehen. Das Problem des Durchfallens der Naht tritt insbesondere beim Schweißen und Löten von Wurzellagen auf, da in der Wurzellage noch keine Lage vorhanden ist, welche eine gewissen Halt auf das flüssige Material an der Bearbeitungsstelle ausüben kann. Bei allen auf die Wurzellage folgenden Lagen stabilisiert die bereits vorliegende Schweißnaht die nun aufzubringende Lage. Diese Stabilisierung kann jedoch unter Umständen zu gering sein, so dass es auch beim Anbringen von weiteren Lagen zu einem Durchfallen der Naht kommen kann. Aber auch beim Verbinden von dünnen Blechen, insbesondere bei Einseitenschweißverbindungen sowie bei allen Schweißaufgaben, bei welchen es gilt einen Spalt zu überbrücken, zeigen sich die mit Durchfallen der Naht verbundenen Probleme. Besonders ausgeprägt ist diese Problematik bei hohen Abschmelzleistungen.

Beim Auftragsschweißen oder Auftragslöten wird hingegen Material auf ein Werkstück aufgebracht. Das Verfahren wird beispielsweise benützt, um verschlissene Bauteile zu reparieren, um verschleißfeste oder/und korrosionsbeständige Rand- oder Oberflächenschichten aufzubringen und um zu Plattieren und Panzern. Das Material wird durch Schweißen aufgebracht, wobei eine oder mehrere Lagen aufgetragen werden. Beim Auftragsschweißen und Auftragslöten wird eine geringe Aufmischung gewünscht, damit eine Entstehung von intermetallischen Phasen so weit wie möglich unterbunden wird. Beim Auftragslöten ist die Aufmischung deutlich geringer als beim Auftragsschweißen, jedoch ist auch hier eine Verbesserung wünschenswert. Beim Auftragsschweißen und Auftragslöten sind zahlreiche der auftretenden Probleme, welche sich mit zunehmender Abschmelzleistung verstärken, auf die stattfindende Aufmischung zurückzuführen.

Der Erfindung liegt deshalb die Aufgabe zugrunde, ein Verfahren zum Lichtbogenfügen mit abschmelzender Elektrode und Wechselstrom anzugeben, welches das Schweißen verbessert, die Einsatzmöglichkeiten verbreitert und auch hohe Abschmelzleistungen ermöglicht. Insbesondere sollen mit dem anzugebenden Verfahren die vorgenannten Probleme sowohl beim Fügen, also sowohl beim Verbindungsschweißen und Verbindungslöten als auch beim Auftragsschweißen und Auftragslöten vermindert werden.

Ein Verfahren gemäß der Erfindung ist im Anspruch 1 definiert. Durch das Auslenken des Lichtbogens aus dem Zentrum der Bearbeitungsstelle wird erreicht, dass der Lichtbogen in der positiven Impulsstromphase, in welcher der höchste Strom anliegt, zumindest teilweise, vorzugsweise während der gesamten Zeit der positiven Impulsstromphase, nicht im Spalt oder an der Auftragsstelle brennt. Da der Lichtbogen mit steigendem Stromwert einen steigenden Lichtbogendruck aufweist, bewirkt die Auslenkung des Lichtbogens beim Lichtbogenschweißen, dass der hohe Lichtbogendruck nicht zentral in die Bearbeitungsstelle einwirkt, sondern an eine daneben liegende Stelle. An dieser Stelle ist der Grundwerkstoff nicht flüssig, sondern fest oder aufgrund der Wärmeeinwirkung erweicht. Deshalb kann das Werkstück an dieser Stelle dem hohen Lichtbogendruck besser standhalten. Beim Lichtbogenlöten ist es ebenfalls von Vorteil, wenn der hohe Lichtbogendruck nicht im Zentrum der Bearbeitungsstelle wirkt.

Wirkt der hohe Lichtbogendruck hingegen zentral in die Bearbeitungsstelle treten die oben beschriebenen Probleme auf. Mit dem erfindungsgemäßen Verfahren wird somit das Durchfallen der Schweißnaht beziehungsweise der Lötnaht vermindert und sogar verhindert. Beim Auftragschweißen wiederum wird die Aufmischung optimiert.

Gemäß der Erfindung wird der Lichtbogen während einer positiven Impulsstromphase in eine erste Richtung und während einer nächsten positiven Impulsstromphase in eine zweite, von der ersten Richtung abweichende Richtung abgelenkt. Dadurch wird eine Einseitigkeit, die zu einer unsymmetrischen Bearbeitung führen kann, vermieden.

Weiterhin ist es von besonderem Vorteil, dass sich erste und zweite Richtung immer abwechseln und sich gegenüberliegen.

Insbesondere ist es von Vorteil, dass sich erste und zweite Richtung gegenüberliegen. Eine derartige Ablenkung lässt sich mit wenig Aufwand realisieren und führt zu einer symmetrischen Bearbeitung ohne Verzerrung der Bearbeitungsrichtung.

Vorteilhafterweise wird ein transversales Magnetfeld angelegt. Durch ein Anlegen eines transversalen Magnetfelds wird die in der Erfindung geforderte Auslenkung besonders vorteilhaft erreicht und die erfindungsgemäßen Vorteile stellen sich in besondere Weise ein.

Besonders ausgeprägt zeigen sich die Vorteile der Erfindung, wenn Abschmelzraten von 6 bis 15 kg/h, vorzugsweise von 8 bis 11 kg/h verwendet werden. Bei hohen Abschmelzleistungen sind besonders hohe positive Impulsstromwerte notwendig, so dass bei hohen Abschmelzraten der Lichtbogendruck während der positiven Impulsstromphase besonders hoch ist. Eine Ablenkung des Lichtbogens ist folglich besonders vorteilhaft.

In einer vorteilhaften Ausgestaltung der Erfindung soll im Werkstück ein Spalt, der durch zwei Kanten gebildet wird, überbrückt werden. Beim Verbindungsschweißen zeigen sich die erfindungsgemäßen Vorteile in besonderer Weise. Durch das erfindungsgemäße Wegnehmen des hohen Lichtbogendrucks wird ein Durchfallen der Naht vermieden. Beim Auftragsschweißen und Auftragslöten zeigt das erfindungsgemäße Verfahren ebenfalls Vorteile, da hier die Aufmischung vorteilhaft beeinflusst werden kann.

Von besonderem Vorteil wird dabei der Lichtbogen immer abwechselnd in Richtung der einen und der anderen Kante ausgelenkt. Somit brennt der abgelenkte Lichtbogen in der Flanke der Schweißnaht. Die Flanke oder Kante hält dem hohen Lichtbogendruck stand, so dass sich die erfindungsgemäßen Vorteile einstellen.

Die Erfindung zeigt besondere Vorteile beim Metall-Schutzgas-Schweißen und Metall-Schutzgas-Löten von Wurzellagen oder Einseitenverbindungen, insbesondere bei Einseitenverbindungen an dünnen Blechen. Derartige Verbindungen sind besonders anfällig für ein teilweises oder vollständiges Durchfallen der Schweißnaht, welchem das erfindungsgemäße Verfahren entgegen wirkt.

Mit Vorteil werden als Schutzgas Gase oder Gasgemische verwendet werden, die zumindest Argon, Helium, Kohlendioxid, Sauerstoff und/oder Stickstoff enthalten. Die Festlegung des geeigneten Gases beziehungsweise der geeigneten Gasmischung erfolgt in Abhängigkeit von der Schweißaufgabe, insbesondere unter Berücksichtigung von Grund- und Zusatzwerkstoff. Es kommen sowohl die Reingase als auch Zwei-, Drei- und Mehr-Komponenten-Gemische zum Einsatz. In vielen Fällen erweisen sich auch dotierte Gasmischungen als besonders vorteilhaft, wobei dotierte Gasmischungen Dotierungen mit aktiven Gasen im vpm-Bereich aufweisen, d.h. die Dotierung erfolgt im Bereich von weniger als einem Prozent, meist weniger als 0,1 Vol.-%. Als Dotiergas werden aktive Gase, wie beispielsweise Sauerstoff, Kohlendioxid, Stickstoffmonoxid, Lachgas (Distickstoffmonoxid) oder Stickstoff verwendet.

Das erfindungsgemäße Verfahren eignet sich insbesondere, wenn Werkstücke aus Stählen oder/und aus Aluminium/Aluminiumlegierungen bearbeitet werden. So eignet es sich insbesondere für alle Stahlsorten inklusive Baustählen, Feinkombaustählen und nichtrostende Stählen. Weiterhin eignet es sich auch für Nickelbasiswerkstoffe. Ebenso ist eine Anwendung für andere Nichteisenmetalle wie beispielsweise Magnesium/Magnesiumlegierungen möglich. Weiterhin werden durch das erfindungsgemäße Verfahren die Möglichkeiten zur Herstellung von Mischverbindungen erweitert.

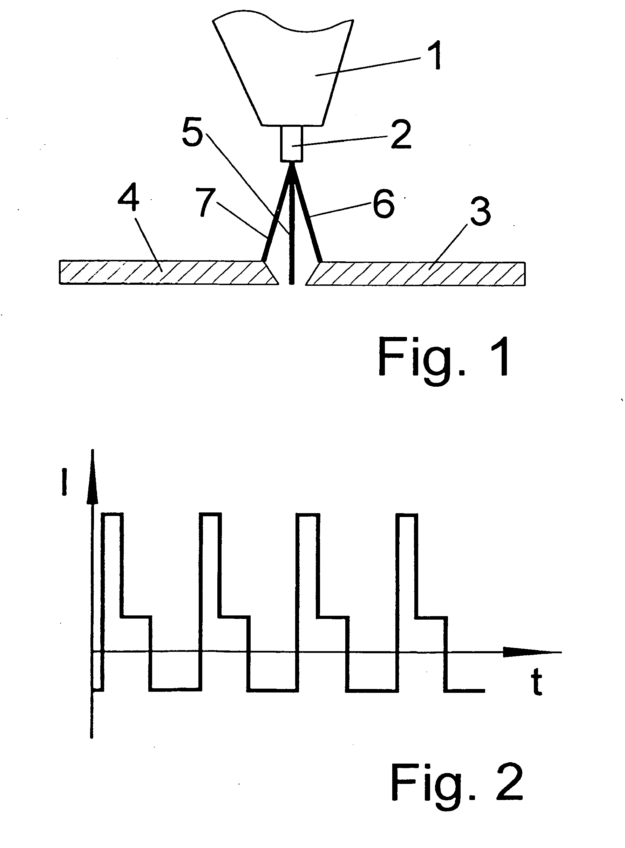

Anhand von Figur 1 und 2 soll nun die Auslenkung des Lichtbogens beim Verbindungsschweißen oder Verbindungslöten näher erläutert werden. Darstellungen und Dimensionen in Fig. 1 sind beispielhaft. In Fig. 1 ist ein Schweißbrenner 1 mit einer abschmelzenden Elektrode 2 dargestellt. Ferner zeigt Fig.1 ein Werkstück, in welchem einen Spalt überbrückt werden und eine Verbindung hergestellt werden sollen. Der Spalt teilt das Werkstück in eine rechte Seite 3 und eine linke Seite 4. Fig. 1 zeigt anstelle des Lichtbogens eine schematische Linie, die im Zentrum des Lichtbogens liegt und somit die Richtung zeigt, in welcher der Lichtbogen brennt. Ohne Auslenkung, d.h. ohne Anliegen eines externen Magnetfelds, brennt der Lichtbogen gerade zum Werkstück hin. Die Richtung des Lichtbogens folgt also der Linie 5. Gemäß der Erfindung wird der Lichtbogen durch ein externes Magnetfeld nun während einer ersten positiven Impulsstromphase aus dem Zentrum des Schweißbades auf die rechte Seite 3 ausgelenkt. Der Lichtbogen brennt nun in Richtung der rechten Kante, also in der Flanke der Schweißnaht. Der Lichtbogen zeigt nun in Richtung 6. In der nächsten positiven Impulsstromphase wird gemäß der Erfindung der Lichtbogen durch ein externes Magnetfeld zur linken Seite 4 hin ausgelenkt und brennt in Richtung der linken Seite. Die Richtung des Lichtbogens folgt somit Linie 7. Eine Auslenkung des Lichtbogens mittels eine magnetischen Feldes erfolgt nur für maximal die Dauer der positiven Impulsstromphase; ansonsten brennt der Lichtbogen gerade in Richtung des Werkstücks, wie es mit Hilfe von Linie 5 gezeigt wird.

Beim Auftragschweißen und Auftragslöten erfolgt die Auslenkung auf die gleiche Weise, jedoch weist das Werkstück keinen Spalt auf, so dass anstelle des Spalts die Schweißlinie zu setzen ist und die Auslenkung von der Schweißlinie weg erfolgt.

Mit Hilfe von Fig.2 soll nun die positive Impulsstromphase, in welcher die Ablenkung mittels eines externen Magnetfelds erfolgt, näher beschrieben werden. Dazu zeigt Fig. 2 eine Stromform, welche beispielsweise für das erfindungsgemäße Verfahren verwendet werden kann. Die Stromform gemäß Fig. 2 weist positive und negative Stromwerte auf. Die positiven Stromwerte liegen während der positiven Phase an. Die positive Phase gliedert sich dabei in eine positive Impulsstromsphase, in welcher ein hohen positiver Strom, der sogenannte Impulsstrom anliegt, und in eine positive Grundstromphase, in welcher ein niedriger positiver Strom anliegt. Die Auslenkung erfolgt in der positiven Impulsstromphase. Wird der Lichtbogen nun in der ersten der dargestellten positiven Impulsstromphase beispielsweise nach rechts ausgelenkt, so wird er gemäß der Erfindung in der nächsten positiven Impulsstromphase nach links ausgelenkt und der übernächsten positiven Impulsstromphase wieder nach rechts und in der darauf folgenden wieder nach links und immer so weiter. Dazu ist es nicht notwendig, dass die Stromform der angebeben folgt; so kann sich beispielsweise die positive Impulsstromphase aus mehreren Impulsstromwerten zusammensetzen. Auch sind Schultern in den Flanken möglich, wobei in Fig. 2 die Flanken als ideale Flanke dargestellt sind, während in der Realität die Flanken eine gewisse Steigung aufweisen. Weiterhin können auch die Reihenfolgen, in welcher die Phasen aufeinander folgen, anders als dargestellt sein und beispielsweise eine weitere positive Grundstromphase eingeschoben sein. Entscheidend für die Erfindung ist lediglich, dass der Lichtbogen zumindest zeitweise, vorteilhafterweise jedoch die gesamte Zeit ausgelenkt wird, in der der hohe positive Impulsstrom anliegt. Auch ist es möglich den Lichtbogen nicht in jeder positiven Impulsstromphase auszulenken.

### Bezugszeichenliste

- 1: Schweißbrenner
- 2: abschmelzende Elektrode
- 3: rechter Teil des Werkstücks
- 4: linker Teil der Werkstücks
- 5: gedachte Linie im Zentrum des nicht abgelenkten Lichtbogens
- 6: gedachte Linie im Zentrum des nach rechts abgelenkten Lichtbogens
- 7: gedachte Linie im Zentrum des nach links abgelenkten Lichtbogens

## Patentansprüche

1. Verfahren zum Lichtbogenfügen, insbesondere zum Lichtbogenschweißen, wobei ein Lichtbogen zwischen Werkstück (3, 4) und abschmelzender Elektrode (2) an einer Bearbeitungsstelle brennt, wobei zur Lichtbogenerzeugung ein Wechselstrom mit mindestens einer positiven und mindestens einer negativen Wechselstromphase zwischen Elektrode (2) und Werkstück (3, 4) angelegt wird, und wobei der Lichtbogen zumindest zeitweise mit mindesten einem externen Magnetfeld beeinflusst wird, **dadurch gekennzeichnet, dass**, sich die positive Wechselstromphase in mindestens eine positive Impulsstromphase und in mindestens eine positive Grundstromphase gliedert, und daß der Lichtbogen durch ein oder mehrere externe Magnetfelder zumindest während jeder fünften, bevorzugt während jeder zweiten, besonders bevorzugt während jeder positiven Impulsstromphase zumindest zeitweise aus dem Zentrum der Bearbeitungsstelle gelenkt wird, sodass der Lichtbogen während einer positiven Impulsstromphase in eine erste Richtung und während einer nächsten positiven Impulsstromphase in eine zweite, von der ersten Richtung abweichende Richtung abgelenkt wird.

2. Verfahren nach Anspruch 1, **dadurch gekennzeichnet, dass** sich erste und zweite Richtung immer abwechseln und sich gegenüberliegen.

3. Verfahren nach Anspruch 1 oder 2, **dadurch gekennzeichnet, dass** ein transversales Magnetfeld angelegt wird.

4. Verfahren nach einem der Ansprüche 1 bis 3, **dadurch gekennzeichnet, dass** Abschmelzraten von 6 bis 15 kg/h, vorzugsweise von 8 bis 11 kg/h verwendet werden.

5. Verfahren nach einem der Ansprüche 1 bis 4, **dadurch gekennzeichnet, dass** im Werkstück ein Spalt, der durch zwei Kanten gebildet wird, überbrückt werden soll.

6. Verfahren nach Anspruch 5, **dadurch gekennzeichnet, dass** der Lichtbogen immer abwechselnd in Richtung der einen und der anderen Kante ausgelenkt wird.

7. Verfahren nach einem der Ansprüche 1 bis 6, **dadurch gekennzeichnet, dass** Wurzellagen oder Einseitenverbindungen gefügt werden.

8. Verfahren nach einem der Ansprüche 1 bis 7, **dadurch gekennzeichnet, dass** als Schutzgas Gase oder Gasgemische verwendet werden, die zumindest Argon, Helium, Kohlendioxid, Sauerstoff und/oder Stickstoff enthalten.

9. Verfahren nach einem der Ansprüche 1 bis 8, **dadurch gekennzeichnet, dass** Werkstücke aus Stählen oder/und aus Aluminium/Aluminiumlegierungen bearbeitet werden.

## Claims

1. Method for arc joining, in particular for arc welding, an arc burning between a workpiece (3, 4) and a consumable electrode (2) at a working location, an alternating current with at least one positive and at least one negative alternating current phase being applied between the electrode (2) and the workpiece (3, 4) to generate the arc, and the arc being influenced at least for a time by at least one external magnetic field, **characterized in that** the positive alternating current phase is divided into at least one positive pulsed current phase and at least one positive background current phase, and **in that** the arc is deflected at least for a time from the centre of the working location by one or more external magnetic fields, at least during every fifth, preferably during every second, particularly preferably during every positive pulsed current phase, so that the arc is deflected into a first direction during a positive pulsed current phase and into a second direction, deviating from the first direction, during a next positive pulsed current phase.

2. Method according to Claim 1, **characterized in that** the first and second directions keep alternating and are opposite to each other.

3. Method according to Claim 1 or 2, **characterized in that** a transversal magnetic field is applied.

4. Method according to one of Claims 1 to 3, **characterized in that** deposition rates of 6 to 15 kg/h, preferably of 8 to 11 kg/h, are used.

5. Method according to one of Claims 1 to 4, **characterized in that** a gap that is formed by two edges is intended to be bridged in the workpiece.

6. Method according to Claim 5, **characterized in that** the arc is deflected in the direction of one edge and the other edge in an ever alternating manner.

7. Method according to one of Claims 1 to 6, **characterized in that** root runs or one-sided connections are joined.

8. Method according to one of Claims 1 to 7, **characterized in that** gases or gas mixtures which contain at least argon, helium, carbon dioxide, oxygen and/or nitrogen are used as a shielding gas.

9. Method according to one of Claims 1 to 8, **characterized in that** workpieces of steels and/or of aluminium/aluminium alloys are worked.

## Revendications

1. Procédé d'assemblage à l'arc électrique, en particulier de soudage à l'arc électrique, dans lequel l'arc électrique jaillit entre une pièce (3, 4) et une électrode fusible (2) dans une zone de traitement, dans lequel on applique un courant alternatif avec au moins une phase de courant alternatif positive et au moins une phase de courant alternatif négative entre l'électrode (2) et la pièce (3, 4) pour la production de l'arc électrique, et dans lequel on influence l'arc électrique au moins temporairement avec au moins un champ magnétique externe, **caractérisé en ce que** la phase de courant alternatif positive se divise en au moins une phase positive de courant pulsé et au moins une phase positive de courant fondamental, et **en ce que** l'on dévie l'arc électrique au moins temporairement hors du centre de la zone de traitement au moyen d'un ou de plusieurs champ(s) magnétique(s) externe(s) au moins pendant chaque cinquième, de préférence pendant chaque deuxième, et de préférence encore pendant chaque phase positive de courant pulsé, de telle manière que l'arc électrique soit dévié dans une première direction pendant une phase positive de courant pulsé et dans une deuxième direction, différente de la première direction, pendant une phase positive suivante de courant pulsé.

2. Procédé selon la revendication 1, **caractérisé en ce que** la première et la deuxième directions sont toujours alternées et en opposition.

3. Procédé selon la revendication 1 ou 2, **caractérisé en ce que** l'on applique un champ magnétique transversal.

4. Procédé selon l'une quelconque des revendications 1 à 3, **caractérisé en ce que** l'on utilise des vitesses de fusion de 6 à 15 kg/h, de préférence de 8 à 11 kg/h.

5. Procédé selon l'une quelconque des revendications 1 à 4, **caractérisé en ce que** l'on doit combler dans la pièce une fente qui est formée par deux faces.

6. Procédé selon la revendication 5, **caractérisé en ce que** l'on dévie l'arc électrique toujours en alternance vers l'une et vers l'autre face.

7. Procédé selon l'une quelconque des revendications 1 à 6, **caractérisé en ce que** l'on assemble des couches de racine ou des assemblages unilatéraux.

8. Procédé selon l'une quelconque des revendications 1 à 7, **caractérisé en ce que** l'on utilise comme gaz de protection des gaz ou des mélanges de gaz, qui contiennent au moins de l'argon, de l'hélium, du dioxyde de carbone, de l'oxygène et/ou de l'azote.

9. Procédé selon l'une quelconque des revendications 1 à 8, **caractérisé en ce que** l'on traite des pièces en aciers et/ou en aluminium / alliages d'aluminium.
